(19) Europäisches Patentamt
European Patent Office
Office européen des brevets

(11) **EP 3 334 032 A1**

(12) **DEMANDE DE BREVET EUROPEEN**

(43) Date de publication:
**13.06.2018 Bulletin 2018/24**

(51) Int Cl.:
***H02S 10/30*** *(2014.01)*

(21) Numéro de dépôt: **17205526.1**

(22) Date de dépôt: **05.12.2017**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD TN**

(30) Priorité: **08.12.2016 FR 1662149**

(71) Demandeur: **Commissariat à l'Energie Atomique
et aux Energies
Alternatives
75015 Paris (FR)**

(72) Inventeurs:
• **AIXALA, Luc
38120 SAINT-EGREVE (FR)**
• **BOUTAMI, Salim
38100 GRENOBLE (FR)**

(74) Mandataire: **Brunelli, Gérald
Marks & Clerk France
Immeuble Visium
22, avenue Aristide Briand
94117 Arcueil Cedex (FR)**

(54) **STRUCTURE DE CONVERSION THERMOPHOTOVOLTAÏQUE**

(57) Structure de conversion thermophotovoltaïque comprenant un empilement comprenant :
- une couche cellule thermophotovoltaïque (1) infrarouge III-V ;
- une couche d'isolant thermique (2) disposée sur la couche cellule thermophotovoltaïque ;
- une première couche de tantale ou de tungstène (3) comprenant un seul motif répété périodiquement ou quasi-périodiquement ;

- une première couche d'oxyde de magnésium ou d'alumine (4) ;
- une deuxième couche pleine de tantale ou de tungstène (5) ;
- une deuxième couche d'oxyde de magnésium ou d'alumine (6) ; et
- une troisième couche de tantale ou de tungstène (7) comprenant un à quatre motifs répétés périodiquement ou quasi-périodiquement.

FIG.1

**Description**

L'invention porte sur une structure de conversion thermophotovoltaïque.

La présente invention concerne la génération d'énergie électrique à partir du flux solaire. Contrairement au photovoltaïque classique qui convertit directement des photons en électrons, la présente invention vise à réaliser une cellule thermophotovoltaïque à haut rendement de conversion qui convertit la lumière ou photons en énergie thermique ensuite convertie en électron.

Les cellules photovoltaïques en Silicium, bien connues, sont les moins coûteuses et les plus répandues car le Silicium est un matériau abondant sur Terre, mais leur rendement est limité à environ 20%. Il est possible de dépasser quelque peu les 20% (25%max) avec des cellules en Silicium dites à hétérojonction (Si-cristallin/Si-amorphe).

Les cellules en matériaux III-V, de coût plus élevé, sont également bien connues et détiennent les records de rendement. Ces cellules sont plus chères, car les matériaux utilisés sont moins abondants, mais permettent d'atteindre des efficacités proches de 50%. Elles sont notamment utilisées dans le domaine aérospatial, car la surface disponible sur les satellites est faible et le coût n'est pas un critère principal pour ce type d'application. Les cellules atteignant les plus hauts rendements sont les cellules à multi-jonctions, où l'on dispose en cascade des matériaux III-V de compositions différentes, mais dont les spectres d'absorption se juxtaposent pour couvrir la plus grande partie du spectre solaire, comme décrit dans "Triple-Junction III-V Based Concentrator Solar Cells: Perspectives and Challenges", de C. Baur, A. W. Bett, F. Dimroth, G. Siefer, M. Meusel, W. Bensch, W. Köstler et G. Strobl, J. Sol. Energy Eng 129, 258 (2006), et dans "Wafer bonded four-junction GaInP/GaAs//GaInAsP/GaInAs concentrator solar cells with 44.7% efficiency", de Frank Dimroth et al, Prog. Photovolt: Res. Appl. 22, 277 (2014).

Ces cellules III-V peuvent être utilisées également avec des concentrateurs de lumière, afin de concentrer un flux solaire sur une petite surface de matériau 111-V, ce qui permet de diminuer le coût des cellules car moins de surface de matériau III-V est nécessaire.

Dans cette démarche de concentration, d'autres cellules plus atypiques ont vu le jour, les cellules thermophotovoltaïques, comme décrit dans "Development of GaSb Photoreceiver Arrays for Solar Thermophotovoltaic Systems", de D. Martin et al., Journal of Solar Energy Engineering 129, 283 (2007). Le principe est de concentrer le flux solaire pour échauffer un corps noir qui réémet alors un flux lumineux dans l'infrarouge large bande, centré sur une longueur d'onde dépendant de sa température, suivant la loi de Wien :

$$\lambda_{\max} T \approx 3000 K.\mu m$$

Pour une température d'échauffement de l'ordre de 3000K, on a alors une émission infrarouge à large bande, mais centrée autour de $\lambda_{\max}$ = $1\mu m.$

Il est alors possible de positionner une simple cellule photovoltaïque III-V en face du corps noir, qui convertit ce rayonnement situé dans le proche infrarouge en courant électrique. Les cellules de type GaSb sont adaptées à ce rayonnement proche infrarouge (gap du GaSb correspondant à l'énergie du proche infrarouge).

Il est également connu l'utilisation de matériaux thermoélectriques pour convertir un gradient de température en électricité (effet Seebeck), la face chaude étant proche d'un corps noir, et absorbant les rayons du soleil, la face chaude étant revêtue d'une surface absorbant les rayonnements solaires pour les convertir en chaleur, comme décrit dans les documents "High-performance flat-panel solar thermoelectric generators with high thermal concentration" de D. Kraemer et al, Nature Materials (2011); DOI: 10.1038/NMAT3013, et "High temperature solar thermoelectric generator Indoor characterization method and modeling" de A. Pereira et al. , Energy 84 (2015) 485-492.

De tels dispositifs arrivent à atteindre des rendements de conversion expérimentaux de l'ordre de 5%, et des rendements de l'ordre de 10% sont espérés à terme.

Il est également connu d'utiliser un module thermoélectrique comme côté froid d'une cellule photovoltaïque, mais le rendement qui en découle n'est pas très bon, car la diminution de rendement de la cellule photovoltaïque due à l'élévation de température générée par la présence du module thermoélectrique grève l'intérêt de cette solution, comme illustré dans le document "Performance of solar cells using thermoelectric module in hot sites" de M. Benghanem et al., disponible à l'adresse Web "http://dx.doi.org/10.1016/j.renene.2015.12.011".

Un but de l'invention est de pallier les problèmes précédemment cités, et notamment d'améliorer sensiblement le taux de conversion thermophotovoltaïque.

Il est proposé, selon un aspect de l'invention, une structure de conversion thermophotovoltaïque comprenant un empilement comprenant :

-    une couche cellule thermophotovoltaïque infrarouge III-V ;
-    une couche d'isolant thermique disposée sur la couche cellule thermophotovoltaïque ;
-    une première couche de tantale ou de tungstène comprenant un seul motif répété périodiquement ou quasi-périodiquement ;
-    une première couche d'oxyde de magnésium ou d'alumine ;
-    une deuxième couche pleine de tantale ou de tungstène ;
-    une deuxième couche d'oxyde de magnésium ou d'alumine ; et
-    une troisième couche de tantale ou de tungstène comprenant un à quatre motifs répétés périodiquement ou quasi-périodiquement.

Ainsi, le rendement ou taux de conversion est nettement amélioré.

On entend par répétition quasi-périodique d'un motif, une déformation d'un cas de répétition périodique d'un motif, dans laquelle on permet un déplacement de chaque motif par rapport à sa position initiale (du cas périodique) de +-25% de la période.

Selon un mode de réalisation, la première couche de tantale ou de tungstène et la troisième couche de tantale ou de tungstène ont une épaisseur comprise entre 20 et 80 nm, et la deuxième couche de tantale ou de tungstène a une épaisseur d'au moins 100 nm.

La deuxième couche de tantale ou de tungstène doit être optiquement opaque. Son épaisseur doit donc être supérieure à l'épaisseur de peau du métal. Ainsi, 100 nm sont bien suffisants dans le visible et le proche infrarouge. Une épaisseur moindre, inférieure à l'épaisseur de peau, dégraderait à la fois le taux d'absorption de la lumière solaire, mais aussi le taux de réémission infrarouge thermique à la longueur d'onde IR d'intérêt.

Dans un mode de réalisation, la deuxième couche d'oxyde de magnésium ou d'alumine a une épaisseur comprise entre 20 et 80 mm et la première couche d'oxyde de magnésium ou d'alumine disposée sur les motifs de la première couche de tantale ou de tungstène a une épaisseur comprise entre 20 et 80 nm.

Ces couches d'oxyde de magnésium ou d'alumine doivent être suffisamment fines pour permettre la résonance optique recherchée entre la première et la deuxième couche de tantale ou de tungstène d'une part (émission IR), et entre la deuxième et la troisième couche de tantale ou de tungstène d'autre part (absorption solaire). Si cette épaisseur est trop importante, les métaux (tantale ou tungstène) ne sont pas couplés optiquement, les résonances n'existent plus, et le résultat de la présente invention serait dégradé. A contrario, si cette épaisseur est trop faible, les première et deuxième couches de tantale ou de tungstène se comportent alors optiquement comme une seule couche métallique, de même que pour les deuxième et troisième couches de tantale ou de tungstène, et le résultat de la présente invention serait aussi dégradé.

Selon un mode de réalisation, la période des motifs de la première couche et de la troisième couche de tantale ou de tungstène est comprise entre 250 nm et 750 nm.

Les motifs de tantale ou tungstène ont une largeur minimale pour fonctionner, ce qui impose une période minimale. La période maximale correspond à la nécessité de ne pas trop éloigner les motifs de tantale ou tungstène, puisque c'est eux qui sont responsables de l'effet optique d'absorption ou d'émission, sinon la structure aurait un fonctionnement dégradé dans les espaces séparant les motifs.

Dans un mode de réalisation, la période des motifs de la première couche et de la troisième couche de tantale ou de tungstène est de 500 nm.

Selon un mode de réalisation, la troisième couche de tantale ou de tungstène comprend deux motifs répétés périodiquement ou quasi-périodiquement.

Le spectre solaire est large. Il est préférable d'intercaler des motifs de tailles différentes, qui vont chacun absorber à une longueur d'onde spécifique le rayonnement solaire, pour aboutir au final à une absorption à large bande du spectre solaire, et ne perdre ainsi aucun photon dans cette conversion de photons en chaleur.

Dans un mode de réalisation, les deux motifs sont carrés ou ronds et alternés en lignes et en colonnes.

La lumière solaire n'étant pas polarisée, il est avantageux de disposer de motifs carrés ou ronds, dont la résonance n'est pas sensible à la polarisation de la lumière.

Selon un mode de réalisation, les deux motifs carrés ou ronds ont respectivement des côtés ou des diamètres mesurant entre 50 nm et 150 nm et entre 100 nm et 200 nm.

Chacun des motifs de dimensions différentes absorbe spécifiquement une gamme de longueurs d'ondes. Le plus petit motif absorbe les petites longueurs d'ondes, et le plus grand absorbe les plus grandes longueurs d'ondes du spectre solaire.

Dans un mode de réalisation, les deux motifs carrés ou ronds ont des côtés ou des diamètres mesurant respectivement 100 nm et 150 nm.

Selon un mode de réalisation, la troisième couche de tantale ou de tungstène comprend quatre motifs répétés périodiquement ou quasi-périodiquement.

On aplanit le spectre d'absorption, et comme on a quatre motifs absorbant chacun une gamme spécifique, la superposition de chaque absorption crée un plateau d'absorption plus plat.

Dans un mode de réalisation, les quatre motifs forment un supra-motif carré dans lequel les quatre motifs sont alternés deux à deux en lignes et en colonne.

Il est important de répéter le supra-motif, pour assurer que toute la surface du dispositif absorbe bien la lumière solaire. Si on laisse des surfaces vides, ces surfaces n'absorberont pas le spectre solaire.

Selon un mode de réalisation, les quatre motifs carrés ou ronds ont respectivement des côtés ou des diamètres mesurant entre 75 et 125 nm, entre 100 et 150 nm, entre 125 et 175 nm, et entre 150 et 200 nm.

On affine la démarche de disposer des motifs de taille différentes. Avec quatre motifs, les variations entre motifs seront plus faibles, et le spectre d'absorption ainsi plus plat.

Dans un mode de réalisation, les quatre motifs carrés ou ronds ont des côtés ou des diamètres mesurant respectivement 100 nm, 125 nm, 150 nm, et 175 nm.

Selon un mode de réalisation, le motif de la première couche de tantale ou de tungstène est carré ou rond et de côté ou de diamètre mesurant entre 150 et 300 nm.

Ce motif émet de la lumière thermique dans la gamme de sensibilité de la cellule III-V sous-jacente, en GaSb. Cette émission est dans le proche IR, contrairement au spectre solaire qui est centré dans le visible. Pour cette raison, les motifs de la première couche de tantale ou tungstène sont plus grands que la moyenne des motifs de la troisième couche de tantale ou tungstène. Leur résonance doit être à plus haute longueur d'onde.

Dans un mode de réalisation, le motif de la première couche de tantale ou de tungstène est carré ou rond et de côté ou de diamètre 225 nm.

Selon un mode de réalisation, la structure de conversion thermophotovoltaïque comprend un dissipateur thermique disposé sous la couche cellule thermophotovoltaïque infrarouge III-V.

Les performances de conversion thermophotovoltaïque de la cellule III-V se dégradent lorsque la température augmente. Le dissipateur permet de garantir des performances optimales de la cellule.

Dans un mode de réalisation, la couche d'isolant thermique est de l'oxyde de magnésium, de l'air ou du vide.

Cette zone d'isolant thermique est à proximité de la structure qui est à haute température. Le matériau utilisé ne doit pas fondre. Le MgO est à haute température de fusion (3126K), et a une faible conductivité thermique (inférieure à 10W/mK) : c'est un isolant thermique pertinent. On peut aussi utiliser de l'alumine pour cet isolant (température de fusion 2345K, conductivité thermique deux fois plus faible que le MgO). Encore plus avantageusement, on peut mettre de l'air, ou du vide, pour lesquels la conduction thermique devient négligeable, et donc l'isolation thermique de la structure est très bonne.

Dans un mode de réalisation, les couches de tantale ou de tungstène et les couches d'oxyde de magnésium ou d'alumine sont discontinues et forment des plots, et comprenant

- un substrat à base de silicium ou de verre transparent dans le domaine infrarouge est disposé entre la couche cellule thermophotovoltaïque infrarouge III-V et la couche d'isolant thermique ; et
- un capot transparent dans le domaine visible sur le haut de la structure, formant un boîtier hermétique.

Le capot est transparent au visible et laisse laisser passer le flux solaire, et le substrat est transparent au proche infrarouge et laisser passer le flux IR thermique vers la cellule III-V.

Selon un mode de réalisation, la structure de conversion thermophotovoltaïque comprend des lentilles disposées sur le capot et adaptées pour concentrer la lumière extérieure sur les plots.

Ainsi, on concentre davantage de flux solaire sur chaque structure de conversion ou plot, et leur température d'échauffement est plus élevée. Il est important que la température de la structure de conversion soit importante, car la puissance IR thermique émise par cette structure (intégrale sur tout le spectre de la luminance), d'après la loi de Stefan-Boltzmann, est proportionnelle à la puissance quatre de la température. Il faut chauffer au maximum cette structure, dans la limite de fusion ou détérioration des matériaux.

Dans un mode de réalisation, l'intérieur du boîtier hermétique est sous vide.

Le vide est encore meilleur que l'air, car sa conductivité thermique tend vers zéro, et la structure de conversion se refroidit moins par conduction/convection. On maintient ainsi une température élevée des structures de conversion, et donc un flux IR émis vers la cellule III-V élevé.

Selon un mode de réalisation, les plots sont montés sur des suspensions à base de silicium, montées sur le substrat à base de silicium transparent dans le domaine infrarouge.

Par exemple, les suspensions à base de silicium peuvent être des composés de silicium, telles que du nitrure de silicium, ou de l'oxyde de Silicium.

En ce cas, la couche d'isolant thermique est le vide (ou l'air si l'isolant n'est pas le vide).

Le vide est meilleur que l'air (plus faible conductivité thermique), l'air meilleur que l'Al2O3, l'Al2O3 meilleure que le MgO, en terme de conductivité thermique, pour l'isolation thermique de la structure, et donc son élévation en température.

Dans un mode de réalisation, les piliers d'une suspension d'un plot sont en matériau thermoélectrique.

Les bras de suspension occasionnent des pertes par conduction thermique inévitables. Si l'on est sous vide, ce sont les seules pertes qui limitent la température d'échauffement de la structure (en plus des pertes radiatives, mais qui sont utiles). On ne peut pas les supprimer puisque la suspension est nécessaire. Par contre, on peut les convertir partiellement en courant électrique par un matériau thermoélectrique. Ce matériau aura d'une part l'avantage de réduire la conductivité thermique des bras (résistance thermique plus importante) et donc d'améliorer l'isolation, et d'autre part de convertir une partie des pertes thermiques par conduction en un courant électrique, qui, additionné au courant de la cellule III-V, augmente le rendement global du dispositif.

En effet, la conductivité thermique des matériaux thermoélectriques est de 1 à 10 W/m/K à comparer à celle des matériaux de la microélectronique qui est bien plus élevée, et l'énergie produite sous forme électrique directement intégrable au système.

Selon un mode de réalisation, le matériau thermoélectrique des piliers de suspension comprend une alternance de matériau dopé P et de matériau dopé N.

Les plots de type P et de type N sont montés électriquement en série et thermiquement en parallèle, de façon à additionner les tensions produites par chaque pilier thermoélectrique grâce à l'effet Seebeck.

L'invention sera mieux comprise à l'étude de quelques modes de réalisation décrits à titre d'exemples nullement limitatifs et illustrés par les dessins annexés sur lesquels :

- les figures 1, 5, 6 et 7 illustrent schématiquement des structures de conversion thermophotovoltaïque, selon divers aspect de l'invention ; et
- les figures 2, 3 et 4 illustrent schématiquement des motifs de tantale utilisés, selon divers aspects de l'invention.

Sur les différentes figures, les éléments ayant des références identiques sont identiques.

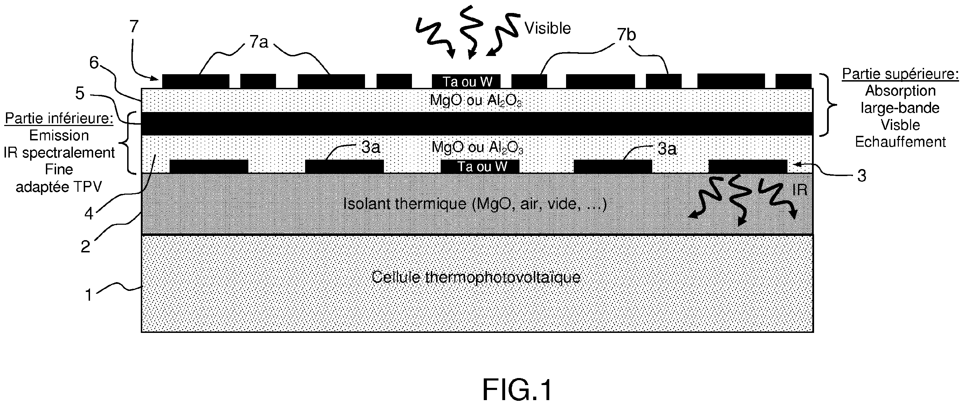

La figure 1 représente une structure de conversion thermophotovoltaïque comprenant un empilement comprenant :

- une couche 1 cellule thermophotovoltaïque infrarouge III-V ;
- une couche 2 d'isolant thermique disposée sur la couche cellule thermophotovoltaïque ;
- une première couche 3 de tantale Ta ou de tungstène W comprenant un seul motif 3a répété périodiquement ou quasi-périodiquement ;
- une première couche 4 d'oxyde de magnésium MgO ou d'alumine $Al_2O_3$ ;
- une deuxième couche 5 pleine de tantale Ta ou de tungstène W ;
- une deuxième couche 6 d'oxyde de magnésium MgO ou d'alumine $Al_2O_3$ ; et
- une troisième couche 7 de tantale comprenant un à quatre motifs, en l'espèce deux 7a, 7b répétés périodiquement ou quasi-périodiquement.

On entend par structure quasi-périodique d'un motif, une déformation d'un cas de répétition périodique d'un motif, dans laquelle on permet un déplacement de chaque motif par rapport à sa position initiale (du cas périodique) de +-25% de la période.

La couche intermédiaire ou deuxième couche de tantale ou de tungstène 5 est pleine, tandis que la couche supérieure ou troisième couche de tantale ou de tungstène 7 et la couche inférieure ou première couche de tantale ou de tungstène 3 sont structurées.

La couche supérieure 7 de tantale ou de tungstène, exposée à la lumière solaire, est composée de un à quatre motifs, en l'espèce deux motifs 7a, 7b, répétés périodiquement, ou quasi périodiquement. Associé à la couche intermédiaire 5 de tantale ou de tungstène, cet ensemble absorbe la quasi-totalité du spectre solaire, et la convertit en chaleur.

La première couche 3 de tantale ou de tungstène, orientée vers couche 1 cellule thermophotovoltatïque III-V, est structurée avec un seul motif 3a, répété périodiquement ou quasi-périodiquement. Associée à la deuxième couche 5 de tantale ou de tungstène, cet ensemble rayonne la chaleur en un flux infrarouge quasi-monochromatique, adapté à la cellule thermophotovoltaïque III-V. Ainsi, aux pertes thermiques près (conductives, convection dans l'air...), la structure convertit la quasi-totalité du flux solaire en énergie électrique.

Les matériaux choisis doivent avoir de très hautes températures de fusion, car l'ensemble chauffe très facilement autour des 2000K.

Le métal doit également avoir de bonnes propriétés optiques dans l'infrarouge (bon réflecteur intrinsèque, de facteur de réflexion R>90%, en couche épaisse, c'est-à-dire de faible taux d'absorption A<10%, et donc de faible émissivité $\varepsilon$ < 10% d'après la loi de Kirchhoff), aussi le tantale Ta est privilégié, dont la température de fusion est de 3293 K. On pourrait également prendre du tungstène W, mais ses propriétés optiques dans l'infrarouge sont moins bonnes, donc il est moins préférable. Sa température de fusion est de 3695K.

L'isolant électrique doit avoir une haute température de fusion, préférentiellement l'oxyde de magnésium Mg0 (3126K), ou l'alumine Al2O3 (2345K).

La première couche 3 de tantale ou de tungstène et la troisième couche 7 de tantale ou de tungstène ont une épaisseur comprise entre 20 et 80 nm, et la deuxième couche 5 de tantale a une épaisseur d'au moins 100 nm. Par exemple, la première couche 3 de tantale ou de tungstène et la troisième couche 7 de tantale ou de tungstène ont une épaisseur de 50 nm.

Bien que la deuxième couche pleine 4 de tantale ou de tungstène soit sans limite supérieure d'épaisseur, afin de ne pas augmenter la capacité thermique de l'ensemble, pour ne pas réduire la température maximale atteignable, il est préférable que son épaisseur soit comprise entre 100nm et 1$\mu$m.

La couche 2 d'isolant thermique a une épaisseur qui dépend de l'isolant, comme l'oxyde de magnésium MgO, le vide ou l'air.

Si la couche 2 est solide (MgO, Al2O3), elle a une épaisseur de 1 $\mu$m minimum pour isoler significativement. Les techniques de dépôt ne permettent pas d'en mettre plus que 10 $\mu$m. Si c'est de l'air ou du vide, il est possible de viser des épaisseurs de 100 $\mu$m idéalement, voire plus, sans limite supérieure. Le flux infrarouge traverse n'importe quelle épaisseur d'air ou de vide.

La deuxième couche 6 d'oxyde de magnésium MgO ou d'alumine $Al_2O_3$ a une épaisseur comprise entre 20 et 80 mm, et la première couche 4 d'oxyde de magnésium MgO ou d'alumine $Al_2O_3$, disposée sur les motifs de la première couche 3 de tantale ou de tungstène, a une épaisseur comprise entre 20 et 80 nm. Par exemple, la deuxième couche 6 d'oxyde de magnésium MgO ou d'alumine $Al_2O_3$ a une épaisseur de 50 nm, et la première couche 4 d'oxyde de magnésium MgO ou d'alumine $Al_2O_3$ disposée sur les motifs de la première couche 3 de tantale ou de tungstène a une épaisseur de 50 nm.

La période Per des motifs 3a de la première couche 3 et des motifs 7a, 7b de la troisième couche 7 de tantale est comprise entre 250 et 750 nm, et préférentiellement 500 nm.

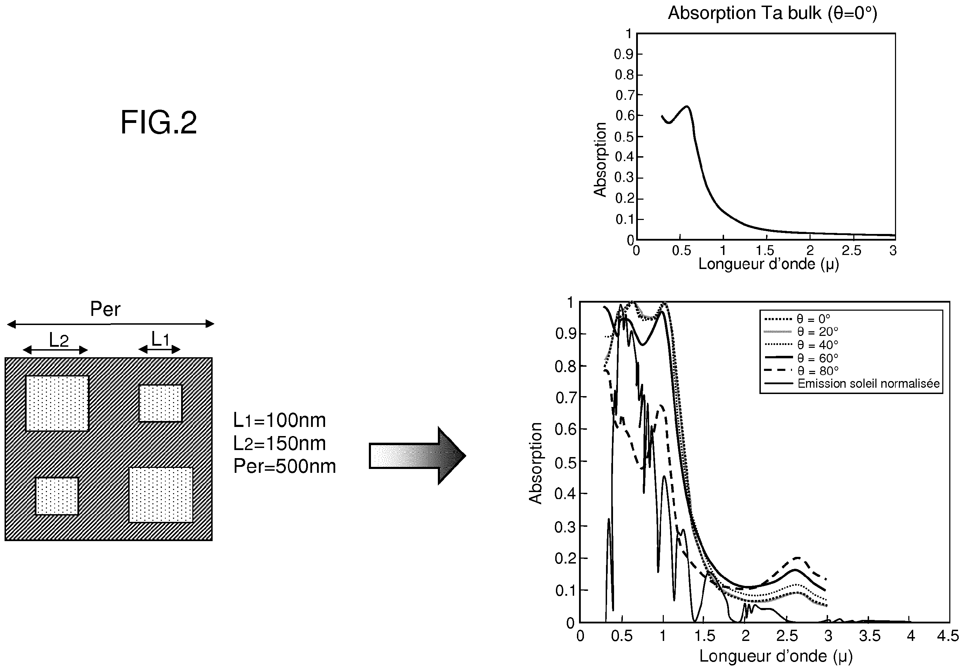

La figure 2 représente schématiquement l'absorption de la troisième couche 7 de tantale ou de tungstène comprend deux motifs, par exemple carrés, répétés périodiquement ou quasi-périodiquement, les deux motifs étant carrés et alternés en lignes et en colonnes. Les deux motifs carrés ont des côtés $L_1$, $L_2$ mesurant respectivement 100 nm et 150 nm.

Sur les exemples des figures 2, 3 et 4, les motifs sont carrés, mais en variante, les motifs peuvent être ronds, et les longueurs données pour des côtés de carrés seraient alors des diamètres.

Mettre deux motifs différents permet d'aplanir la courbe d'absorption dans le visible. Notons que l'absorption est quasi-totale pour tous les angles d'incidence, ce qui rend la structure efficace avec un concentrateur.

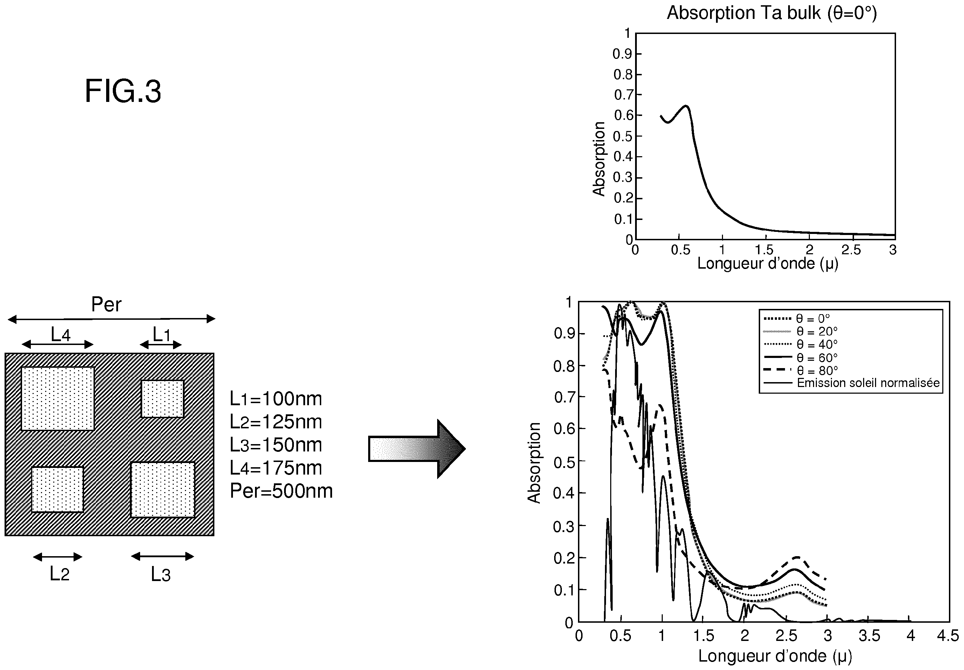

La figure 3 représente schématiquement l'absorption de la troisième couche 7 de tantale ou de tungstène comprend quatre motifs, par exemple carrés, répétés périodiquement ou quasi-périodiquement, les quatre motifs forment un supra-motif carré dans lequel les quatre motifs sont alternés deux à deux en lignes et en colonne. Les quatre motifs forment un supra-motif carré dans lequel les quatre motifs sont alternés deux à deux en lignes et en colonne, et ont des côtés $L_1$, $L_2$, $L_3$, $L_4$ mesurant respectivement 100 nm, 125 nm, 150 nm, et 175 nm.

Notons que l'absorption est quasi-totale pour tous les angles d'incidence, ce qui rend la structure efficace avec un concentrateur.

Comparée à l'absorption d'une simple couche de tantale ou de tungstène non structurée, qui est significative mais pas totale dans le visible, l'ensemble constitué de la troisième couche 7 structurée de tantale ou de tungstène et de la deuxième couche 5 pleine de tantale ou de tungstène fournit une absorption large bande dans tout le domaine visible, quasi-totale, et invariante à l'angle d'incidence (donc adapté à la présence d'un concentrateur). Cela forme donc un convertisseur de flux solaire en chaleur quasi-parfait.

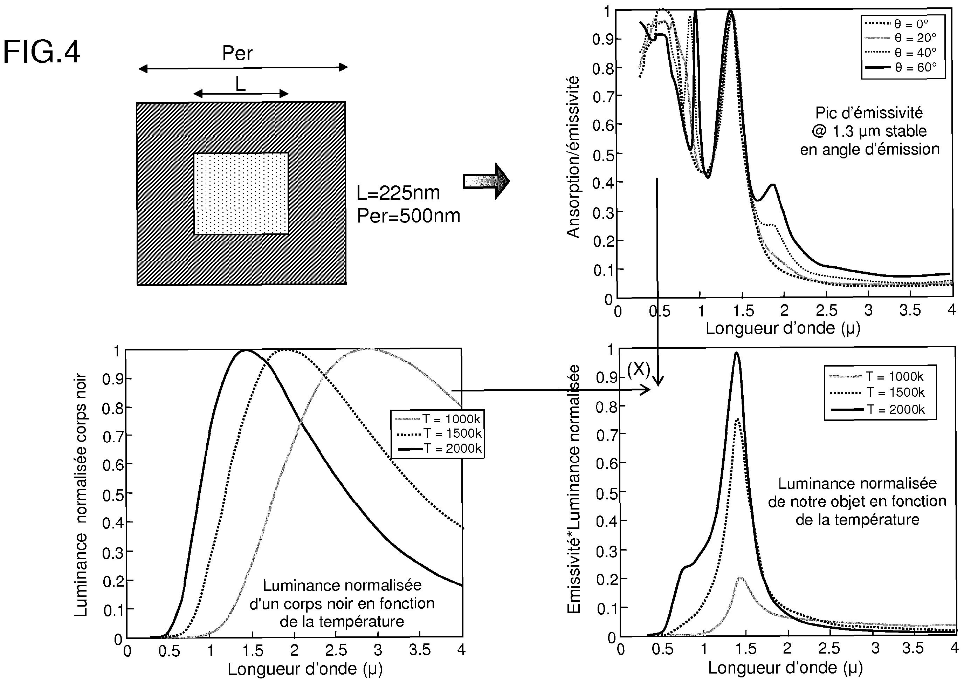

La structuration de la première couche 3 de tantale ou de tungstène est illustrée sur la figure 4. On a typiquement un motif, par exemple carré de côté L de 225nm, répété périodiquement ou quasi-périodiquement, à une période Per de 500nm. Le calcul de l'absorption (égale à l'émissivité d'après la loi de Kirchoff) de cette structure, montre une absorption dans le visible, et une absorption signée spectralement dans le proche IR, autour de $\lambda=1.5\mu m$.

Pour connaître la vraie luminance de cette première couche 3 structurée de tantale ou de tungstène, il faut multiplier cette émissivité par le spectre de luminance du corps noir dépendant de sa température: on s'aperçoit ainsi que l'ensemble formé par la deuxième couche pleine 5 de tantale ou de tungstène et la première couche structurée 3 de tantale ou de tungstène rayonne de la lumière essentiellement dans le proche infrarouge IR, pour une température proche de 2000K, avec un spectre étroit dans les longueurs d'ondes proches de 1.5$\mu$m. Il n'y a que peu d'émission dans le visible car il faudrait pour cela avoir une température proche de celle du Soleil.

C'est également la raison pour laquelle la troisième couche 7 de tantale ou de tungstène ne rayonne rien, car son émissivité est nulle dans le domaine infrarouge IR, et la luminance du corps noir est quasi nulle dans le domaine visible à ces températures. On a donc une première couche 3 de tantale ou de tungstène structurée qui joue le rôle de convertisseur quasi parfait de chaleur en émission infrarouge quasi monochromatique, cette émission étroite spectralement pouvant être totalement absorbée par une cellule thermophotovoltaïque de type GaSb simple.

La structure peut être réalisée en couche étendues latéralement comme représentée en figure 1.

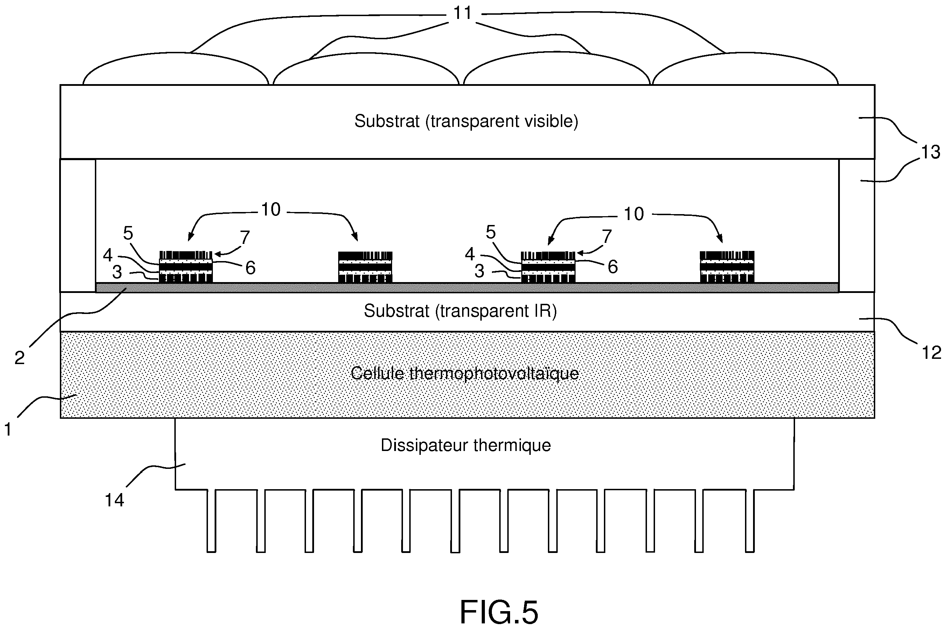

En variante, la structure peut être réalisée, comme montrée en figure 5, en zones isolées formant des plots 10, avec des lentilles concentratrices 11 qui permettent de concentrer la lumière vers des zones plus petites, i.e. les plots 10, qui chaufferont plus.

Dans cette configuration, les structures sont réalisées sur substrat 12 à base de Silicium ou de verre, avec éventuellement la couche d'isolant thermique 2 intercalaire, par exemple en oxyde de Silicium ou nitrure de silicium. Le silicium, transparent à l'IR, laisse passer le rayonnement infrarouge de la partie inférieure de la structure vers la cellule thermophotovoltaïque qui est justement adaptée au rayonnement infrarouge. Les lentilles concentratrices 11 sont réalisées sur un substrat transparent dans le domaine visible, i.e. à la lumière solaire sur le haut de la structure, formant un boîtier ou capot hermétique 13; le matériau transparent dans le domaine visible peut, par exemple, être du verre ou plastique.

Il peut être préférable de mettre les structures sous vide, pour faciliter leur échauffement.

Il est également préférable d'ajouter à la structure de conversion thermophotovoltaïque, un dissipateur thermique 14, disposé sous la couche cellule thermophotovoltaïque 1 infrarouge III-V.

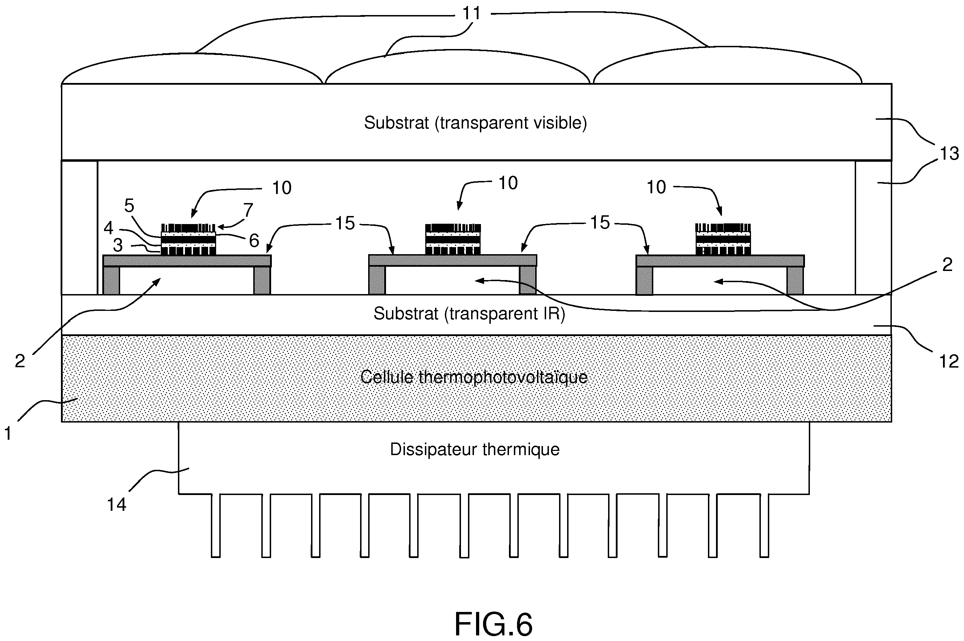

La figure 6 représente une structure similaire à celle de la figure 5, dans laquelle les plots ou zones isolées 10 sont réalisés sur des membranes 15 (de type MEMS), suspendues, sur substrat à base de Silicium.

Le montage ou emballage, pour "packaging" en langue anglaise, sous vide, se fait lors du collage du capot 13 transparent dans le domaine visible. Le collage du capot 13 peut se faire par collage moléculaire, ou scellement anodique.

Les lentilles concentratrices 11 permettent de focaliser la lumière vers les membranes 15, de sorte qu'elle n'arrive pas entre les membranes 15, car ces membranes 15 sont suspendues par des bras qui prennent une place non négligeable et ne sont pas une surface utile d'absorption. Les lentilles concentratrices 11 permettent également par un deuxième niveau de concentration, d'augmenter la température de la structure de conversion. Lorsqu'on suspend les structures et qu'on les met sous vide, les seules pertes de chaleur se font par rayonnement infrarouge vers la couche 1 cellule thermophotovoltaïque, et par conduction par les bras et piliers de soutien des membranes 15, cette perte de chaleur par conduction représente de l'énergie perdue.

La suspension des membranes 15 se fait par gravure humide de couches sacrificielles (silice par solution HF par exemple, sinon polyimide), ou gravure humide du silicium (gravure humide KOH).

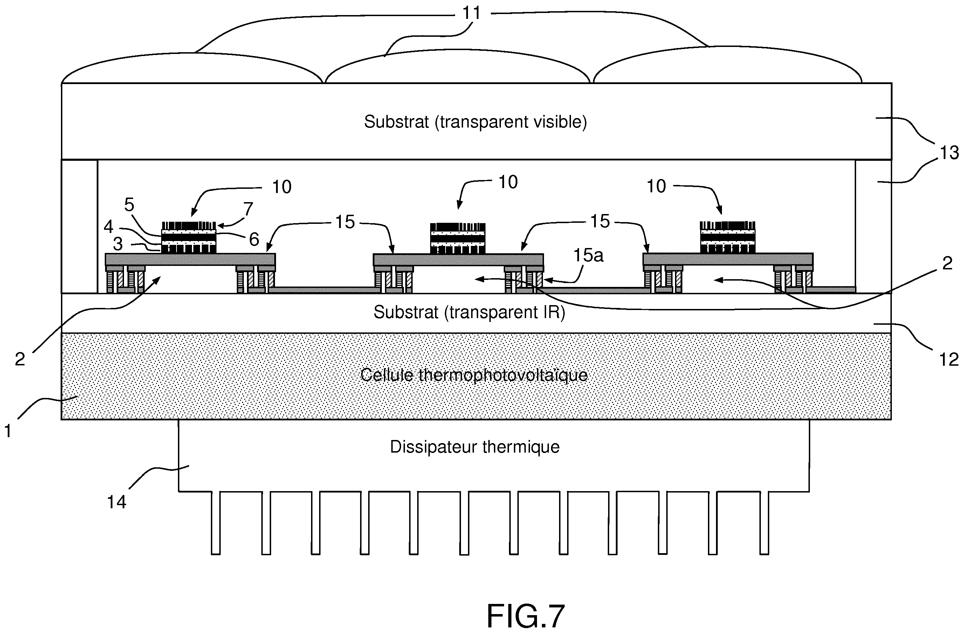

En outre, il est possible, comme illustré sur la figure 7, de réaliser les piliers 15a des membranes 15 de suspension des plots 10, en matériau thermoélectrique avec alternance de matériau (piliers) dopé P et N. Il est ainsi possible d'améliorer l'isolation thermique des membranes 15, et de convertir une partie des pertes par conduction en électricité, récupérée par ailleurs, en plus du courant généré par la cellule thermophotovoltaïque par conversion de flux infrarouge. Cela améliore encore le rendement global de la structure.

En effet, l'alternance de piliers de type P et type N de matériaux de type SiGe, supportant la structure rayonnante, permet d'ajouter une forte résistance thermique et de convertir une partie (10 à 12 %) des pertes thermiques en électricité par effet Seebeck.

## Revendications

1. Structure de conversion thermophotovoltaïque comprenant un empilement comprenant :

    - une couche cellule thermophotovoltaïque (1) infrarouge III-V ;
    - une couche d'isolant thermique (2) disposée sur la couche cellule thermophotovoltaïque ;
    - une première couche de tantale ou de tungstène (3) comprenant un seul motif répété périodiquement ou quasi-périodiquement ;
    - une première couche d'oxyde de magnésium ou d'alumine (4) ;
    - une deuxième couche pleine de tantale ou de tungstène (5) ;
    - une deuxième couche d'oxyde de magnésium ou d'alumine (6) ; et
    - une troisième couche de tantale ou de tungstène (7) comprenant un à quatre motifs répétés périodiquement ou quasi-périodiquement.

2. Structure de conversion thermophotovoltaïque selon la revendication 1, dans laquelle la troisième couche de tantale ou de tungstène (7) comprend deux motifs répétés périodiquement ou quasi-périodiquement.

3. Structure de conversion thermophotovoltaïque selon la revendication 2, dans laquelle les deux motifs sont carrés ou ronds et alternés en lignes et en colonnes.

4. Structure de conversion thermophotovoltaïque selon la revendication 3, dans laquelle les deux motifs carrés ou ronds ont respectivement des côtés ou des diamètres mesurant entre 50 nm et 150 nm et entre 100 nm et 200 nm.

5. Structure de conversion thermophotovoltaïque selon la revendication 4, dans laquelle les deux motifs carrés ou ronds ont des côtés ou des diamètres mesurant respectivement 100 nm et 150 nm.

6. Structure de conversion thermophotovoltaïque selon la revendication 1, dans laquelle la troisième couche de tantale ou de tungstène (7) comprend quatre motifs répétés périodiquement ou quasi-périodiquement.

7. Structure de conversion thermophotovoltaïque selon la revendication 6, dans laquelle les quatre motifs forment un supra-motif carré dans lequel les quatre motifs sont alternés deux à deux en lignes et en colonne.

8. Structure de conversion thermophotovoltaïque selon la revendication 7, dans laquelle les quatre motifs carrés ou ronds ont respectivement des côtés mesurant entre 75 et 125 nm, entre 100 et 150 nm, entre 125 et 175 nm, et entre 150 et 200 nm.

9. Structure de conversion thermophotovoltaïque selon la revendication 8, dans laquelle les quatre motifs carrés ou ronds ont des côtés ou des diamètres mesurant respectivement 100 nm, 125 nm, 150 nm, et 175 nm.

10. Structure de conversion thermophotovoltaïque selon l'une des revendications précédentes, comprenant un dissipateur thermique (14) disposé sous la couche cellule photovoltaïque infrarouge III-V.

11. Structure de conversion thermophotovoltaïque selon l'une des revendications précédentes, dans laquelle les couches de tantale ou de tungstène (3, 5, 7) et les couches d'oxyde de magnésium ou d'alumine (4, 6) sont discontinues et forment des plots, et comprenant

    - un substrat (12) à base de silicium ou de verre transparent dans le domaine infrarouge est disposé entre la couche cellule photovoltaïque (1) infrarouge III-V et la couche d'isolant thermique (2) ; et
    - un capot (13) transparent dans le domaine visible sur le haut de la structure, formant un boîtier hermétique.

12. Structure de conversion thermophotovoltaïque selon la revendication 11, dans laquelle l'intérieur du boîtier hermétique (13) est sous vide.

**13.** Structure de conversion thermophotovoltaïque selon l'une des revendications 11 à 12, dans laquelle les plots (10) sont montés sur des suspensions (15) à base de silicium, montées sur le substrat (13) à base de silicium transparent dans le domaine infrarouge.

**14.** Structure de conversion thermophotovoltaïque selon la revendication 13, dans laquelle les piliers (15a) d'une suspension d'un plot sont en matériau thermoélectrique.

**15.** Structure de conversion thermophotovoltaïque selon la revendication 14, dans laquelle le matériau thermoélectrique des piliers de suspension (15a) comprend une alternance de matériau dopé P et de matériau dopé N.

FIG.1

FIG.2

Absorption Ta bulk (θ=0°)

Per

L2    L1

L1=100nm
L2=150nm
Per=500nm

θ = 0°
θ = 20°
θ = 40°
θ = 60°
θ = 80°
Emission soleil normalisée

EP 3 334 032 A1

# FIG.3

Absorption Ta bulk (θ=0°)

L1=100nm
L2=125nm
L3=150nm
L4=175nm
Per=500nm

Legend:
θ = 0°
θ = 20°
θ = 40°
θ = 60°
θ = 80°
Emission soleil normalisée

EP 3 334 032 A1

FIG.4

Per

L

L=225nm
Per=500nm

Pic d'émissivité
@ 1.3 µm stable
en angle d'émission

θ = 0°
θ = 20°
θ = 40°
θ = 60°

Ansorption/émissivité

Longueur d'onde (µ)

Luminance normalisée corps noir

T = 1000k
T = 1500k
T = 2000k

Luminance normalisée
d'un corps noir en fonction
de la température

Longueur d'onde (µ)

Emissivité*Luminance normalisée

(X)

T = 1000k
T = 1500k
T = 2000k

Luminance normalisée
de notre objet en fonction
de la température

Longueur d'onde (µ)

EP 3 334 032 A1

FIG.5

EP 3 334 032 A1

FIG.6

Substrat (transparent visible)

Substrat (transparent IR)

Cellule thermophotovoltaïque

Dissipateur thermique

EP 3 334 032 A1

**FIG.7**

Substrat (transparent visible)

Substrat (transparent IR)

Cellule thermophotovoltaïque

Dissipateur thermique

EP 3 334 032 A1

Europäisches Patentamt

European Patent Office

Office européen des brevets

# RAPPORT DE RECHERCHE EUROPEENNE

Numéro de la demande

EP 17 20 5526

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/288318 A1 (GULER URCAN [US] ET AL) 8 octobre 2015 (2015-10-08) * abrégé; figures 1-10,13 * * alinéa [0032] - alinéa [0033] * * alinéa [0043] * * alinéa [0049] * * alinéa [0054] * * alinéa [0057] - alinéa [0060] * * alinéa [0075] * ----- | 1,2,6, 10-15 | INV. H02S10/30 |
| A | US 2012/312360 A1 (SHVETS GENNADY [US] ET AL) 13 décembre 2012 (2012-12-13) * abrégé; figures 3,7,8,9 * * revendication 4 * ----- | 1 | |
| A | US 2013/074906 A1 (SISKAVICH BRAD [US]) 28 mars 2013 (2013-03-28) * abrégé; figures 4,5 * ----- | 11-13 | |
| A | US 2003/230336 A1 (MALFA ENRICO [IT] ET AL) 18 décembre 2003 (2003-12-18) * abrégé; figure 4 * ----- | 11-13 | DOMAINES TECHNIQUES RECHERCHES (IPC) |
| A | US 2006/202187 A1 (GOVYADINOV ALEXANDER [US] ET AL) 14 septembre 2006 (2006-09-14) * abrégé; figure 3e * * alinéa [0033] * * revendications 10,11 * ----- | 1 | H02S |
| A | US 2013/092211 A1 (COLLIN STEPHANE [FR] ET AL) 18 avril 2013 (2013-04-18) * abrégé; figures 1A-3 * ----- | 1 | |

Le présent rapport a été établi pour toutes les revendications

| Lieu de la recherche | Date d'achèvement de la recherche | Examinateur |
|---|---|---|
| Berlin | 5 avril 2018 | Favre, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 3 334 032 A1**

**ANNEXE AU RAPPORT DE RECHERCHE EUROPEENNE
RELATIF A LA DEMANDE DE BREVET EUROPEEN NO.**

EP 17 20 5526

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-04-2018

| Document brevet cité au rapport de recherche | Date de publication | Membre(s) de la famille de brevet(s) | Date de publication |
|---|---|---|---|
| US 2015288318 A1 | 08-10-2015 | CA 2927907 A1<br>EP 3044814 A1<br>US 2015288318 A1<br>WO 2015038203 A1 | 19-03-2015<br>20-07-2016<br>08-10-2015<br>19-03-2015 |
| US 2012312360 A1 | 13-12-2012 | AUCUN | |
| US 2013074906 A1 | 28-03-2013 | AUCUN | |
| US 2003230336 A1 | 18-12-2003 | EP 1220326 A1<br>US 2003230336 A1 | 03-07-2002<br>18-12-2003 |
| US 2006202187 A1 | 14-09-2006 | TW 200638564 A<br>US 2006202187 A1<br>US 2008035952 A1<br>WO 2006099203 A1 | 01-11-2006<br>14-09-2006<br>14-02-2008<br>21-09-2006 |
| US 2013092211 A1 | 18-04-2013 | EP 2561550 A2<br>FR 2959352 A1<br>US 2013092211 A1<br>WO 2011131586 A2 | 27-02-2013<br>28-10-2011<br>18-04-2013<br>27-10-2011 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE C. BAUR ; A. W. BETT ; F. DIMROTH ; G. SIEFER ; M. MEUSEL ; W. BENSCH ; W. KÖSTLER ; G. STROBL.** Triple-Junction III-V Based Concentrator Solar Cells: Perspectives and Challenges. *J. Sol. Energy Eng,* 2006, vol. 129, 258
- **DE FRANK DIMROTH et al.** Wafer bonded four-junction GaInP/GaAs//GaInAsP/GaInAs concentrator solar cells with 44.7% efficiency. *Prog. Photovolt: Res. Appl.,* 2014, vol. 22, 277
- **DE D. MARTIN et al.** Development of GaSb Photoreceiver Arrays for Solar Thermophotovoltaic Systems. *Journal of Solar Energy Engineering,* 2007, vol. 129, 283
- **DE D. KRAEMER et al.** High-performance flat-panel solar thermoelectric generators with high thermal concentration. *Nature Materials,* 2011
- **DE A. PEREIRA et al.** High temperature solar thermoelectric generator Indoor characterization method and modeling. *Energy,* 2015, vol. 84, 485-492
- **DE M. BENGHANEM et al.** *Performance of solar cells using thermoelectric module in hot sites, http://dx.doi.org/10.1016/j.renene.2015.12.011*